Europäisches Patentamt

European Patent Office

Office européen des brevets

(19)

(11) Publication number: **0 162 665**
A2

(12) **EUROPEAN PATENT APPLICATION**

(21) Application number: **85303433.8**

(22) Date of filing: **16.05.85**

(51) Int. Cl.⁴: **A 01 C 3/06**

(30) Priority: **22.05.84 GB 8413078**

(43) Date of publication of application:
**27.11.85 Bulletin 85/48**

(84) Designated Contracting States:
**AT BE CH DE FR IT LI LU NL SE**

(71) Applicant: **Walley, Charles Edward**
**Cotton Abbotts**
**Waverton Chester CH3 5PH(GB)**

(72) Inventor: **Walley, Charles Edward**
**Cotton Abbotts**
**Waverton Chester CH3 5PH(GB)**

(74) Representative: **Spruce, George Philip et al,**
**Shaw, Bowker & Folkes Whitehall Chambers 23 Colmore Row**
**Birmingham B3 2BL(GB)**

(54) **Spreader vehicle.**

(57) Agricultural or other spreader vehicle for distribution or dispersing of manure or other materials includes a body (10) within which is an auger or other feed element (12) for transferring the material progressively within the body to a discharge opening (17). In order to prevent the material lodging to form a bridge above the feed element which would starve it and prevent consistent operation an oscillating anti-bridging plate (30) is provided which overlies the interior wall surface including an area opposite the opening, driven by an eccentric (33) on the auger shaft.

Fig. 1

**0162665**

## SPREADER VEHICLE

This invention relates to spreader vehicles, particularly but not exclusively for agricultural use in the transport and broadcast distribution of materials, for example the spreading onto the land of manures of various kinds; and/or the dispensing of feedstuffs, silage, fodder, bedding or like materials to livestock. The vehicle may be self-propelled or, more usually, a trailed vehicle for use with a tractor, and vehicles fulfilling these and similar functions are referred to herein as "spreader vehicles".

More specifically the present invention relates to spreader vehicles of the kind having a body or other load container for containing a bulk of the material, and power driven feed means acting within the container to progressively transfer the material from one region of the container to another and/or to the exterior of the container e.g. through a discharge opening in wall structure thereof, and spreader vehicles of this kind are hereinafter referred to as "spreader vehicles as hereinbefore defined".

Examples of spreader vehicles as hereinbefore defined are described in my British Patent No. 2080662 and my pending Patent Application No. 8406638 dated 14th March 1984.

Spreader vehicles as hereinbefore defined may be called on to handle bulk materials having a wide range of consistencies and handling characteristics, including a bulk comprising a non-uniform mix of material having widely differing consistencies and which may inadvertently contain foreign bodies such as stones, pieces of wood or the like. The spreaders described in my aforementioned patent and patent application are designed to handle and spread material of consistency ranging from freeflowing liquid or semi-liquid slurry to compacted straw-based farmyard "muck" which is almost solid, which may be wet and sticky or near dry, and which may be well rotted or with fibres intact.

A recurrent problem in the handling of bulk non-liquid material is that of "bridging"; the material, particularly if it is fibrous, sticky or of a clay-like consistency is liable to bind or compact so that it lodges in the body as a structurally self-supporting or non-free flowing mass, particularly immediately above or adjacent to the envelope of movement of any feed means acting within the bulk container with the result that the feed means may be completely starved of material and operation ceases or the operation is irregular and intermittent because successive bridgings occur which collapse or become dislodged by chance at random intervals giving inefficient and unsatisfactory performance.

Attempts made hitherto to prevent or reduce incidence of bridging have been made, directed mainly to the shape and manner of operation of the feed means itself within the body e.g. where an auger or other rotatably driven element or elements is or are employed as the feed means, making its or their action more "aggressive" by attempting to provide a tearing or agitating action but such arrangements are often ineffective firstly because the bridging takes place away from the direct influence of the feed means, and secondly because if the action is too aggressive power consumption will rise and the mechanism may not stand up to the strain and/or the speed of feed of material will be excessive.

0162665

The object of the invention is to provide a spreader vehicle of simple and reliable construction which is effective in handling a wide range of material with reliable and consistent performance in an economical manner.

According to the invention there is provided a spreader vehicle as hereinbefore defined including an anti-bridging element operatively driven for movement across an inner face of a portion of the container wall to prevent lodging thereon of any build-up of material in use which might prevent or restrict material reaching the feed means to be acted on thereby.

Conveniently the anti-bridging element is a plate, grid or similar formation overlying a substantial area of said inner face and driven for oscillating movement across the face, preferably in a path of movement including a substantial up and down component.

Where the feed means includes one or more rotary elements within the body the anti-bridging element may conveniently be driven by being linked within the body to a crank, eccentric or cam driven with the rotary element(s).

The motion of the anti-bridging element may be rectilinear or angular.

Preferably, where the feed means acts to transfer the material to a discharge opening of the container or body, the anti-bridging element acts at least in a zone of the container including or immediately adjacent to the opening to ensure a continuous feed of material through the latter.

One example of the invention is now more particularly described with reference to the accompanying drawings wherein:-

Figure 1 is a diagrammatic sectional view of a spreader vehicle viewed from the front end of the body; and

Figure 2 is a diagrammatic sectional view on line 2-2 of Figure 1.

The spreader vehicle shown is a multi-purpose trailer vehicle primarily for agricultural use comprising a load container in the form of a hopper-shaped body 10 carried on land wheels 11. Feed means in the form of a rotatably driven auger 12 extends longitudinally of a lower region of body 10, its envelope of rotation extending in close proximity to a floor 13 and the lower regions of generally upwardly divergent sidewalls 15, 16 of body 10.

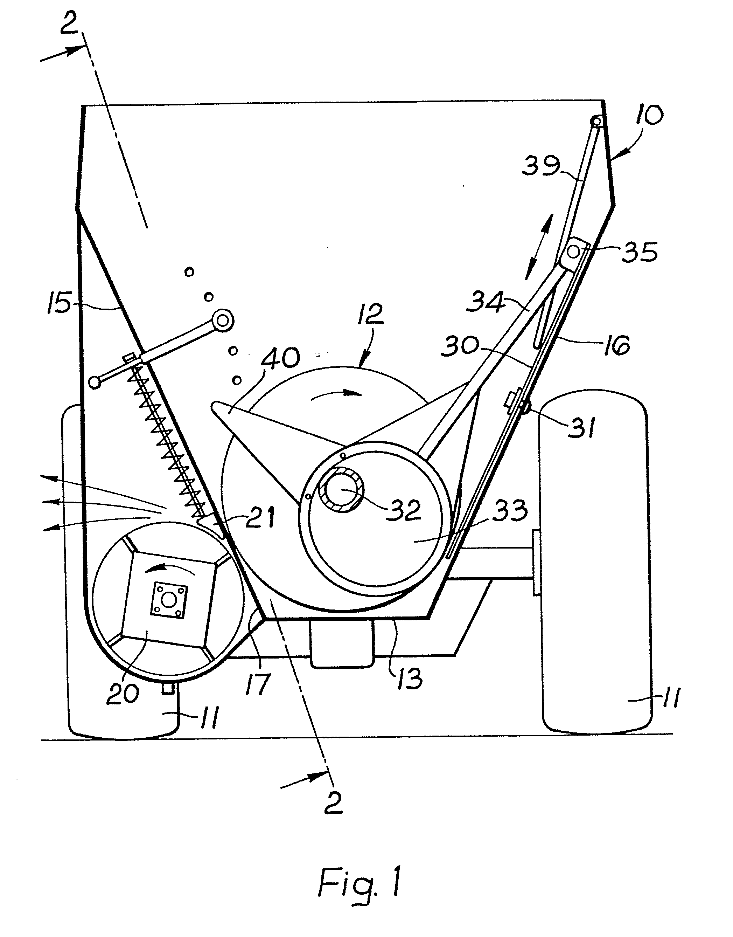

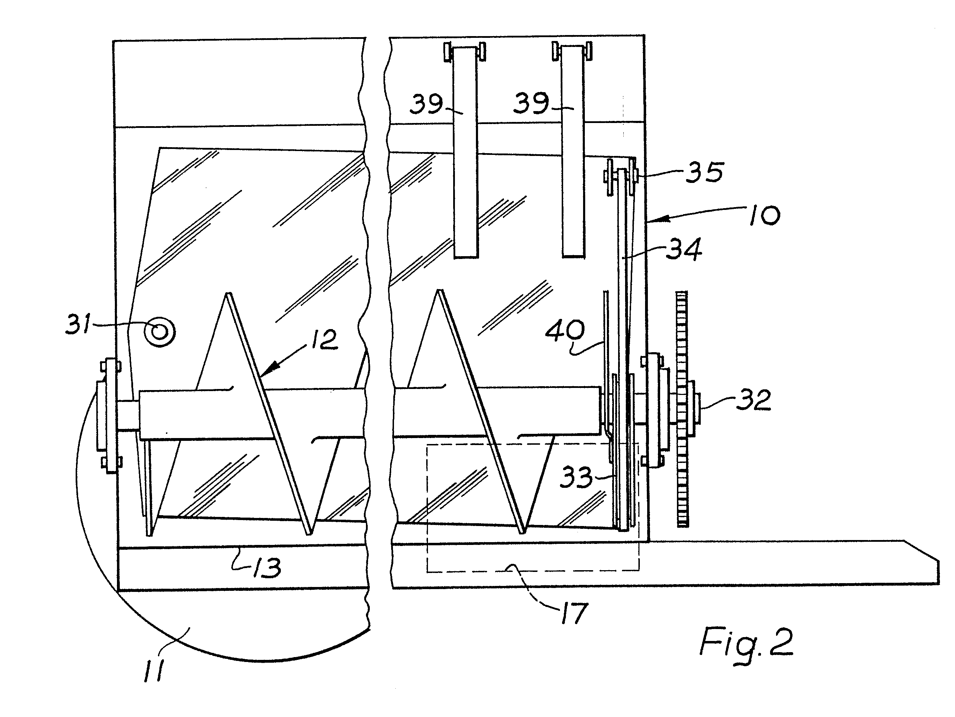

The auger is driven clockwise as viewed in Figure 1 and operates to progressively feed a load of bulk materials contained in body 10 forwardly to a side discharge opening 17 (shown in broken line in Figure 2) in the front lower portion of side wall 15. The effective area of opening 17 can be selectively varied by a horizontally sliding door (not shown).

A spreader impeller 20 (Figure 1), operatively rotatably driven in the opposite direction to auger 12 about an axis parallel to the latter and at a much higher speed, is located immediately outside opening 17 in a housing projecting laterally from the forward end of body 10. The impeller rotates in close proximity to the opening to fling the material clear of the body in an overshot action in a broadcast spreading pattern. Impeller 20 may take various forms and may include scoops or paddles to act on fluid materials and/or beaters, tines or blades for breaking up and spreading more solid materials, preferably in conjunction with a resiliently mounted and adjustable laceration plate 21 mounted adjacent the upper edge of opening 17 to act in the manner described in my said co-pending patent application No. 8406638.

An anti-bridging element in the form of a planar rectangular plate 30 is mounted within body 10 to overly a substantial area of the inner face of side wall 16, in particular that part of said face which is generally opposite opening 17. The rear end of plate 30 is attached to wall 16 by a pivot 31 so that it can be moved angularly on said wall with the greatest extent of up and down movement being at the front end.

The forward end of a shaft 32 on which auger 12 is mounted carries an eccentric 33 immediately adjacent the front wall of the body and which is linked by a connecting rod 34 to a clevis 35 at the upper forward corner of plate 30.

The stroke of eccentric 33 is about 330mm and as auger 12 is driven at an operative speed of about 15 rpm a continuous oscillating movement is imparted to plate 30 during operation of the spreader vehicle.

In use, when materials of a semi-solid sticky or non-freeflowing consistency are being handled, particularly as the weight of a full load tends to compress material in the lower regions of body 10, auger 12 tends to dig a cylindrical tunnel through the bulk of material so that a bridge of material is likely to form across the top of auger 12 resting on the sidewalls 15 and 16. The provision of plate 30 means that the material rests against this rather than the sidewall 16 itself and as the plate is being continuously oscillated any build up of material is dislodged and slides downwards to be acted on by the auger, particularly at the front end of the body where it is essential that consistent feed of material takes place to and through opening 17 for continuous and even spreading action.

Material can only reach opening 17 by passing round with auger 12 in a path between the axis of the latter and sidewall 16 then below the auger axis across floor 13 to reach the opening and the provision of the oscillating plate 30 particularly in the critical area of sidewall 16 immediately adjacent the envelope of revolution of auger 12 opposite opening 17, ensures that feed of material is not interrupted.

It is contemplated that other forms of anti-bridging element might be employed, for example reciprocally driven or oscillating bars, tines or a grid arrangement sweeping across appropriate areas of the side or other walls to prevent lodgment of material thereon, in angular or rectilinear movement. For some applications a single bar or wiper element could suffice.

It is preferred but may not be essential that the movement of the anti-bridging element includes a substantial up and down component because it is found in practice that although the material rests on or against plate 30 or any other bridging element and tends to be supported thereby, the up and down motion causes movement of the bulk of material above the auger or other feed means in which the upward component is somewhat less than the downward component, in other words the material, regardless of its consistency, gradually sinks in a regular manner to be acted on by the feed means. To assist downward feed of the material under the action of plate 30 and resist any tendency for the material to be lifted above the top of body 10 which might cause spillage a pair of metal strips 39 are pivotally suspended from the top edge region of body 10 to hang down against or near the face of plate 30. These allow material to fall freely but obstruct its upward movement so that it is "walked" downwardly as plate 30 oscillates.

It is contemplated that various methods of driving the anti-bridging element might be employed, for example such independent drive means as a hydraulic ram, or a drive connection from the exterior of the body, but the more direct interior drive is preferred as this avoids making unnecessary apertures in the body walls (which give rise to problems if liquid materials such as slurries are to be handled) and which enable the drive to be direct and strongly made (for there is substantial loading on plate 30 or any other form of anti-bridging element particularly when the body or container is fully loaded).

While a slow and substantial oscillating movement is preferred as described above a faster and shorter travel of the anti-bridging element may be provided, even down to a stroke of 25mm or less at much higher speeds but it must be borne in mind that agricultural spreader vehicles have to stand up to heavy duty and often adverse conditions (e.g. risk of jamming through foreign bodies, corrosion etc.) and high speed mechanisms are liable to excessive wear and breakage.

As the body empties there may also be a tendency for a residue of material to stick in the forward corner above opening 17 out of reach of auger 12 and remote from the action of plate 30. To dislodge this and further promote regular feed of material to the opening a sweep arm 40 is rigidly mounted on the sheave of eccentric 33 for cyclic movement therewith in a path which carries its top into that corner and downwards adjacent to the top of the opening.

The invention may be applied to other forms of spreader vehicle, for example those whose feed means comprise a plurality of rotatably driven augers, and/or one or more beaters, agitators or mixer elements within the body; and to spreader vehicles having side or rear delivery from the body, for example those having moving floors or chain or scraper conveyors as their feed means for rear discharge.

CLAIMS

1. A spreader vehicle including a load container (10) for containing a bulk of material, feed means (12) acting within the container for progressive transfer of the material from one region to another, and discharge means (20) operable to discharge material from the container, characterised by an anti-bridging element (30) operatively driven for movement across an inner face of a portion of the container wall to prevent lodging thereon of any build-up of the material in use which might prevent or restrict the material from reaching the feed or discharge means to be acted on thereby.

2. A vehicle as in Claim 1 characterised in that said element is a formation (30) overlying a substantial area of said inner face.

3. A vehicle as in Claim 2 characterised in that said formation is a plate (30).

4. A vehicle as in Claim 1, 2 or 3 characterised in that said element is driven for oscillating movement across the face.

5. A vehicle as in Claim 4 characterised in that said movement includes a substantial up and down component.

6. A vehicle as in Claim 4 or 5 characterised in that said movement is angular.

7. A vehicle as in Claim 4 or 5 characterised in that said movement is rectilinear.

8. A vehicle as in any preceding claim characterised in that the anti-bridging element (30) is driven by being linked to drive means (32) of the feed and/or discharge means.

9. A vehicle as in Claim 8 characterised in that the feed means comprises a rotary element (12) within the body and the anti-bridging element (30) is linked thereto within the body (10) by a mechanism (33) converting rotary motion to oscillating movement.

10. A vehicle as in Claim 8 characterised in that said mechanism includes an eccentric (33) within the body (10) and driven with said rotary element (12).

11. A vehicle as in any preceding claim characterised in that the container (10) includes a discharge opening (17) through which material is fed by the feed means (12) in use, and the anti-bridging element (30) acts in at least a region of the container including or immediately adjacent to the opening.

12. A vehicle as in Claim 11 characterised in that said element (30) acts across the inner face of a wall (16) of the container on the opposite side thereof to a wall (15) defining the discharge opening (17).

13. A vehicle as in any preceding claim characterised in that the feed means includes an auger (12).

14. A vehicle as in any preceding claim characterised by downwardly depending means (39) overlying an upper edge of the anti-bridging element (30) within the container (10) permitting downward movement of material but resisting upward movement thereof.

15. A vehicle as in any preceding claim characterised by a sweep element (40) mounted within the container (10) for cyclic movement adjacent a corner of the container to dislodge any accumulation of material therein.

Fig. 1

Fig.2